# EUROPEAN PATENT APPLICATION

(11) **EP 1 420 568 A1**
(43) Date of publication of application: **19.05.2004**
(21) Application number: 03257151.5
(22) Date of filing: 12.11.2003
(51) Int. Cl.: H04M 1/21, H04M 1/725, H04N 1/00, H04N 7/14

(54) **Portable electronic appliance incorporating a camera**

(30) Priority: 13.11.2002 JP 2002328994
(71) Applicant: FUJITSU LIMITED, Kawasaki-shi, Kanagawa 211-8588 (JP)
(72) Inventor: Kitada, Yasuyuki, c/o Fujitsu Limited, Kawasaki-shi Kanagawa 211-8588 (JP)
(74) Representative: Gibbs, Christopher Stephen

(57) **Abstract**

A portable electronic appliance such as a cell-phone comprises two camera units 11a, 11b, for which corresponding flashlights 12a, 12b are provided. When switching is made between the two camera units, switching is also automatically made between the mobile lights. When shooting is made with the first camera unit, the first mobile light serves as a flash. When shooting is made by switching from the first camera unit to the second camera unit, the second mobile light serves as a flash. When shooting is made with both of the first and the second camera units, both of the first and the second mobile lights serve as flashes.

## Description

The present invention relates to a portable electronic appliance comprising two shooting devices, and more particularly, to a technology for flashlights used along with the two shooting devices comprised by the portable electronic appliance.

In recent years, some portable electronic appliances such as cellular phones, PDAs (Personal Digital Assistants), etc. have comprised a capability for shooting an image, for processing the shot image, and for transmitting the shot image via a communication. Portable electronic appliances having this shooting capability sometimes have a twin-camera configuration where two shooting devices are included and switched in use. See for instance:

Japanese Patent Publication No. HEI10-155141 "Information Terminal Device"

This patent document discloses a configuration where a second camera is optionally mounted in addition to a standardly equipped camera head, images viewed on the two cameras are switched or synthesized and shot.

Japanese Patent Publication No. 2002-176478 "Electronic Appliance Having a Shooting Capability"

This patent document discloses a configuration that comprises two cameras such as a front camera and a back camera, enables a face image of a user and a peripheral scenic image to be shot respectively with the front camera and the back camera, and can transmit and display either or both of these images.

For a portable electronic appliance having such a twin-camera configuration, a flashlight for use in shooting an image with the cameras is not considered at all although various types of configuration for switching between two cameras are considered and described.

The present invention is defined in claims 1, 10 and 11. An electronic appliance according to the present invention comprises a first camera unit, a second camera unit, a camera-selecting unit, a first light, a second light, a light-selecting unit, and a shooting controlling unit. This electronic appliance is, for example, a cellular phone, a PHS, a PDA, etc.

The first camera unit shoots an image. The second camera unit is provided on a side different from the first camera unit, and also shoots an image.

The first light illuminates a shooting target when shooting is made with the first camera unit. The second light illuminates a shooting target when shooting is made with the second camera unit.

The camera selecting unit selects at least either of the first camera unit and the second camera unit, and the light-selecting unit selects at least either of the first light and the second light based on a selection made by the camera selecting unit.

The shooting controlling unit takes a shot by using at least either of the first camera unit and the second camera unit, which is selected by the camera selecting unit, and at least either of the first light and the second light, which is selected by the light selecting unit.

The light selecting unit, for example, selects the first light when the camera selecting unit selects only the first camera unit, selects the second light when the camera selecting unit selects only the second camera unit, and selects both of the first light and the second light when the camera selecting unit selects both of the first camera unit and the second camera unit.

The shooting controlling unit may be configured to switch between a mode where at least either of the first light and the second light, which is selected by the light selecting unit, is lit in synchronization with shooting made with the first camera unit or the second camera unit, which is selected by the camera selecting unit, and a mode where at least either of the first light and the second light is lit from a time point prior to a time point when the shooting is made, based on a user instruction.

Furthermore, the present invention also covers a shooting method executed by the electronic appliance within its scope.

According to embodiments of the present invention, the light selecting unit selects at least either of the first light and the second light based on the selection made by the camera selecting unit, and switching is automatically made to the first light or the second light when the first camera unit or the second camera unit is switched.

### Brief Description of the Drawings

For a better understanding of the invention embodiments of it will now be described, by way of example, with reference to the accompanying drawings, in which:
Figs. 1A and 1B are an external view of a cellular phone having a twin camera configuration according to a preferred embodiment;
Fig. 2 is a block diagram showing a rough configuration of a portion which governs a shooting capability in an internal configuration of the cellular phone according to the preferred embodiment;
Fig. 3 is a flowchart showing a first operation process example of the cellular phone when shooting is made with a camera on an opposite shooting side;
Fig. 4 is a flowchart showing a second operation process example of the cellular phone when shooting is made with the camera on the opposite shooting side;
Fig. 5 is a flowchart showing a first operation process example of the cellular phone when shooting is made with a camera on a user shooting side;
Fig. 6 is a flowchart showing a second operation process example of the cellular phone when shooting is made with the camera on the user shooting side;
Fig. 7 is a flowchart showing a first operation process example when shooting is made with the camera on the user shooting side after shooting is made with the camera on the opposite shooting side;
Fig. 8 is a flowchart showing a second operation process example when shooting is made with the camera on the user shooting side after shooting is made with the camera on the opposite shooting side;
Fig. 9 is a flowchart showing a first operation process example when shooting is simultaneously made with the camera on the opposite shooting side and the camera on the user shooting side; and
Fig. 10 is a flowchart showing a second operation process example when shooting is simultaneously made with the camera on the opposite shooting side and the camera on the user shooting side.

In the following example, a cellular phone is taken as an example of a portable electronic appliance to which the present invention is applied. However, the portable electronic appliance to which the present invention is applied is not limited only to a cellular phone, and may be a PHS (Personal Handyphone system), a PDA, etc. so long as the portable electronic appliance has a twin-camera configuration.

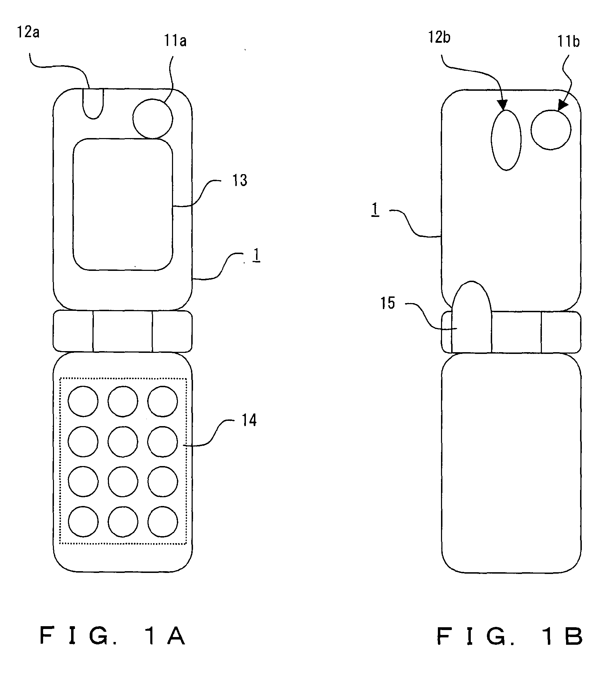

**Fig. 1** is an external view of a cellular phone having a twin camera configuration according to the preferred embodiment.

Fig. 1A shows the cellular phone 1 when viewed from the front side (hereinafter referred to as a user shooting side) on which a display unit 13 exists, whereas Fig. 1B shows the cellular phone 1 when viewed from its back side (hereinafter referred to as an opposite shooting side).

In these figures, the cellular phone 1 comprises two camera units 11a and 11b, mobile lights 12a and 12b which are provided respectively for the camera units 11, a display unit 13, a button inputting unit 14, a transmission/reception antenna 15 for wirelessly transmitting voice data, shot image data, etc., and a mike and a speaker, which are not shown and intended to capture voice data of a user, and to output received voice data.

Among these constituent elements, the camera unit 11a is a camera (hereinafter referred to as a user shooting side camera) for shooting, which is provided on the same user shooting side as that of the display unit 13, the mobile light 12a is a light source which illuminates a shooting target for the camera unit 11a. The camera unit 11a and the mobile light 12a are used to shoot a user side of the cellular phone 1. On the other hand, the camera unit 11b is a camera for shooting (hereinafter referred to as an opposite shooting side camera), which is provided on the opposite shooting side on the back of the camera unit 11a, and the mobile light 12b is a light source which illuminates a shooting target for the camera unit 11b. The camera unit 11b and the mobile light 12b are used to shoot a shooting target on the side opposite to the user of the cellular phone 1. Additionally, when shooting is made with the camera unit 11a or 11b, an image shot with the activated camera unit 11a or 11b is displayed on the display unit 13, and a user takes a shot while viewing the displayed image.

On the button inputting unit 14, a camera button, a submenu button, a confirmation button, a light button, a shutter button, a storage button, an end button, an UP button, and a DOWN button are provided as input buttons for taking a shot with the camera units 11a and 11b in addition to input buttons provided for a telephone capability of the cellular phone, such as buttons for inputting a telephone number from 1 to 9, 0, etc. The above described buttons may be configured respectively as one button of the button inputting unit 14, or one button may serve as a plurality of capabilities.

A user takes shooting by selecting and using the two camera units 11a and 11b depending on purpose with an operation of these input buttons. This point will be described later.

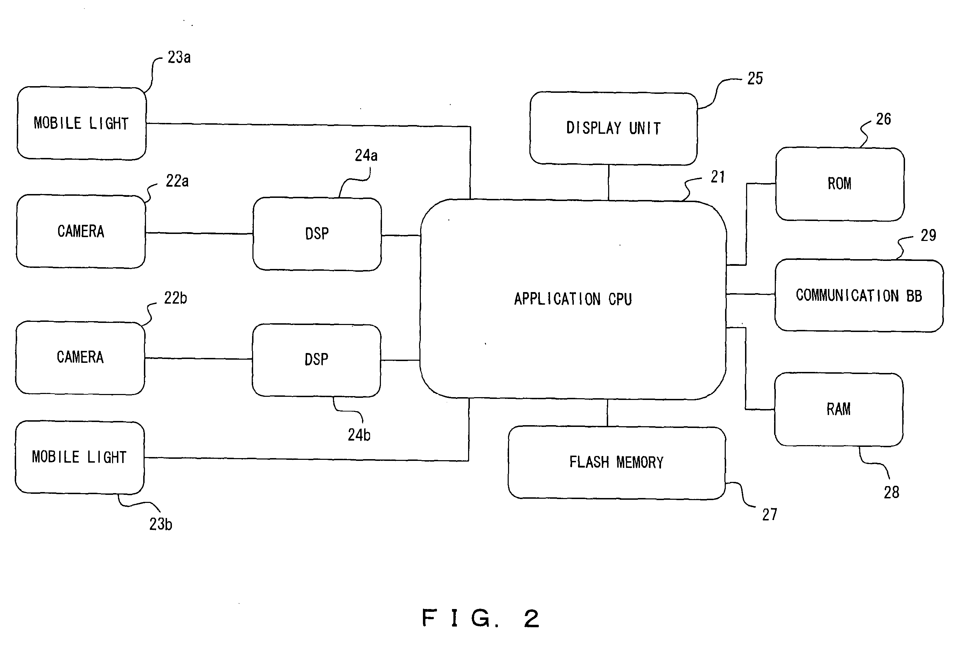

**Fig. 2** is a block diagram showing the internal configuration of the cellular phone 1. This figure shows a rough configuration of only a portion which governs the shooting process executed by the camera units 11a and 11b, but does not show portions related to the other capabilities, such as a configuration for implementing the telephone capability, etc.

In this figure, the cellular phone 1 includes an application CPU 21, camera units 22a and 22b, mobile lights 23a and 23b, DSPs 24a and 24b, a display unit 25, a ROM 26, a flash memory 27, a RAM 28, and a communication BB 29.

Among these constituent elements, the camera units 22a and 22b, the mobile lights 23a and 23b, and the display unit 25 respectively correspond to the camera units 11a and 11b, the mobile lights 12a and 12b, and the display unit 13, which are shown in Fig. 1.

The camera units 22a and 22b are cameras for shooting. The camera unit 22a is used when a user takes a shot by orientating the camera unit 22a toward the user. In the meantime, the camera unit 22b is used when a user takes a shot by orientating the camera unit 22b to a direction other than the user while viewing the display unit 13. Therefore, since assumed use situations and shooting targets of these camera units 22a and 22b differ, their settings for focal length, view angle, etc. vary. For example, the camera unit 22a is intended to make a user shoot only the user himself or several people including the user. Accordingly, its focal length is set to several tens of centimeters so as to achieve focus, its view angle is made larger, and the number of lenses is increased to prevent a distortion on the periphery of an image. Conversely, the camera unit 22b is intended to be used to shoot a subject several meters away or a scenic view. Therefore, its focal length is set to be larger than that of the camera unit 22a, and its view angle is set to be smaller in contrast.

Images shot by the camera units 22a and 22b are converted into digital image data respectively by the DSPs 24a and 24b, and output to the application CPU 21. The DSPs 24a and 24b are digital signal processors for image processing. After executing various types of image processing such as a contrast adjustment, etc. for the images shot by the camera units 22a and 22b, the DSPs 24a and 24b compress the image data, and output the compressed image data to the application CPU 21.

The application CPU 21 is intended to control the processes of the entire cellular phone based on a program and data within the ROM 26. In accordance with an instruction input from a user via the button inputting unit 14, the application CPU 21 executes the processes such as switching (to be described later) between the camera units 22a and 22b, activation and deactivation, switching between the mobile lights 23a and 23b in synchronization with the switching between the camera units 22, switching between light-emitting ways and the like, stores image data from the DSPs 24a and 24b in the flash memory 27, transmits the image data to a communications network with the communication BB 29.

The mobile lights 23a and 23b are illuminants configured by a high luminance LED, or the like, and serve as a flashlight which illuminates a subject when the light level is insufficient. Additionally, the mobile lights may be configured in a way such that a favorite color can be selected from among a plurality of color lightings at the time of shooting, and a filter effect can be added to an image.

The mobile light 23a is used when shooting is made with the camera unit 22a, whereas the mobile light 23b is used when shooting is made with the camera unit 22b. Accordingly, as the mobile lights 23a and 23b, mobile lights having configurations suitable for corresponding camera units 22 are respectively used. For example, the camera unit 22a is assumed to be used for shooting at close range. Therefore, the mobile light 23a with a light level lower than that of the mobile light 23b is used. Switching is also made between the mobile lights 23a and 23b the same time switching is made between the camera units 22a and 22b that take a shot.

The display unit 25 is configured by an LCD, etc. Images shot by the camera units 22, a selection menu, various information items are displayed on the display unit 25. The ROM 26 is intended to store a program executed by the application CPU 21. The RAM 28 serves as a working memory of the application CPU 21. The communication BB 29 is a wireless device which makes a wireless communication, and exchanges data with a communication terminal of another cellular phone 1, etc. via a base station.

The mobile lights 23a and 23b have a synchronous light emission mode where light is emitted in synchronization with the shutter of the camera units 22a and 22b, and a continuous light emission mode where a subject is illuminated by lighting the light from a time point prior to a time point when the shutter is released, as light emitting ways. A user can switch between these modes depending on a shooting situation, a shooting target, how to use the camera units 22.

An operation example of the cellular phone 1 when shooting is made with the opposite shooting side camera (camera unit 11b) is described next.

The camera unit 11b is assumed to be used similar to a general camera with which a user shoots a subject several meters away or a scenic view while viewing an image displayed on the display unit 13.

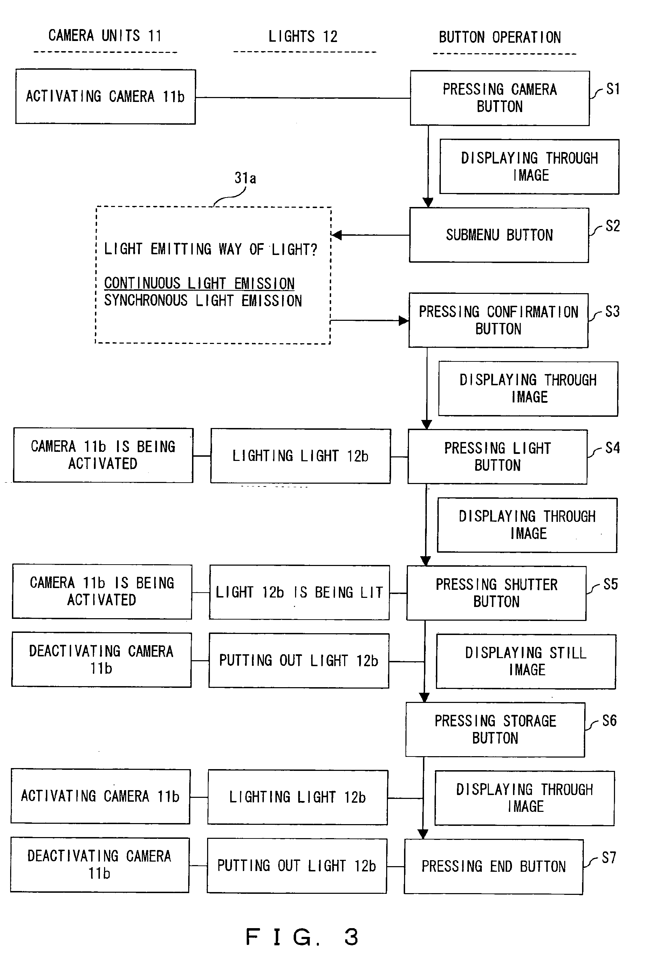

**Fig. 3** is a flowchart showing a first operation process example of the cellular phone 1 when shooting is made with the opposite shooting side camera (camera unit 11b).

When a user desires to take a shot with the cellular phone 1, and presses the camera button of the button inputting unit 14 (step S1), the cellular phone 1 activates the camera unit 11b which starts up by default among the two camera units, and makes the display unit 13 display an active image (through image) viewed on the camera unit 11b.

Next, when the user presses the submenu button of the button inputting unit 14 and performs an operation (step S2), the cellular phone 1 makes the display unit 13 display a menu 31a for selecting the light emission mode of the mobile lights 12. When the user selects either the continuous light emission mode or the synchronous light emission mode by operating the UP/DOWN button of the button inputting unit 14, and presses the confirmation button (step S3), the cellular phone makes operation settings for the selected light emission mode. The example shown in this figure assumes that the user selects the continuous light emission mode.

Next, when the user presses the light button (step S4), the cellular phone 1 lights the mobile light 12b because the continuous light emission mode is selected.

In this state, assume that the user moves the position or the orientation of the cellular phone 1 while viewing the through-image displayed on the display unit 13, and presses the shutter button of the button inputting unit 14 when an image that the user desires to shoot is displayed on the display unit 13 (step S5). In response to the press of the shutter button, the cellular phone 1 takes a shot with the camera unit 11b, deactivates the camera unit 11b thereafter, and puts out the mobile light 12b. Additionally, the cellular phone 1 makes the display part 13 display the image shot at this time as a still image.

When the user presses the storage button so as to store this shot image (step S6), the cellular phone 1 records the data of the shot image in the flash memory 27, activates the camera unit 11b in order to enable the next shooting, makes the display unit 13 display a through image, and lights the mobile light 12b.

In this state, when the user presses the end button of the button inputting unit 14 so as to stop the shooting (step S7), the cellular phone 1 deactivates the camera unit 11b, and puts out the mobile light 12b.

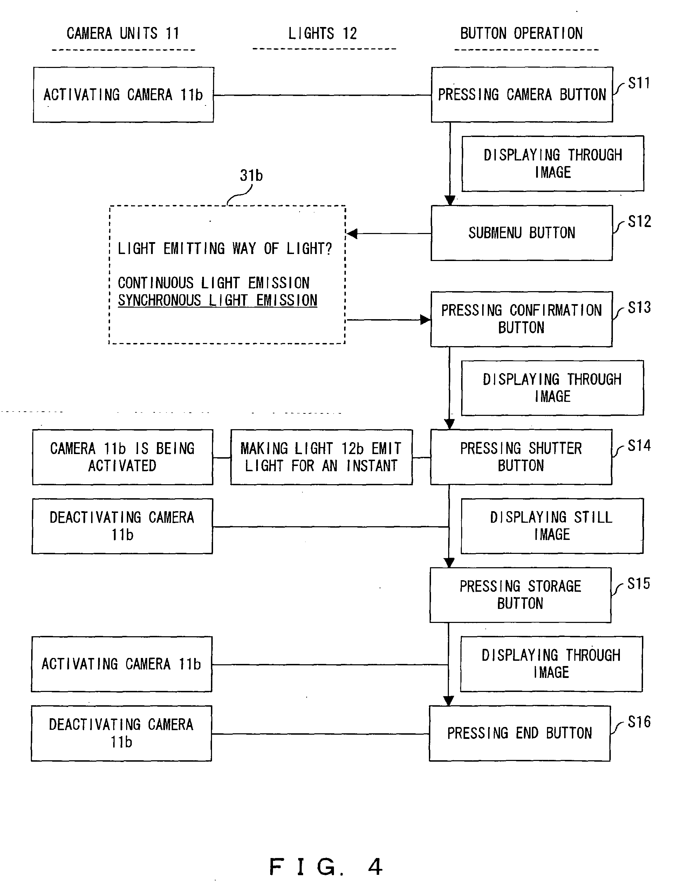

**Fig. 4** is a flowchart showing a second operation process example of the cellular phone 1 when shooting is made with the opposite shooting side camera (camera unit 11b). This figure shows an operation example of the cellular phone 1 when the synchronous light emission mode is selected as a way of lighting the mobile lights 12.

In this figure, when a user desires to take a shot with the cellular phone 1, and presses the camera button of the button inputting unit 14 (step S11), the cellular phone 1 activates the default camera unit 11b among the two camera units, and makes the display unit 13 display a through image viewed on the camera unit 11b.

Next, when the user presses the submenu button of the button inputting unit 14 and performs an operation (step S12), the cellular phone 1 makes the display unit 13 display a menu 31b for selecting the light emission mode of the mobile lights 12. When the user selects either the continuous light emission mode or the synchronous light emission mode by operating the UP/DOWN button of the button inputting unit 14, and presses the confirmation button (step S13), the cellular phone 1 makes operation settings for the selected light emission mode. This example assumes that the user selects the synchronous light emission mode.

In this state, assume that the user moves the position or the orientation of the cellular phone 1 while viewing the through image displayed on the display unit 13, and presses the shutter button of the button inputting unit 14 when an image that the user desires to shoot is displayed on the display unit 13 (step S14). In synchronization with the press of the shutter button, the cellular phone 1 makes the mobile light 12b emit light for an instant to illuminate a subject, and takes a shot with the camera unit 11b, and deactivates the camera unit 11b thereafter. Additionally, the cellular phone 1 makes the display unit 13 display the image shot at this time as a still image.

When the user presses the storage button so as to store this shot image (step S15), the cellular phone 1 records the data of the shot image in the flash memory 27, activates the camera unit 11b for the next shooting, and makes the display unit 13 display a through image.

In this state, when the user presses the end button of the button inputting unit 14 so as to stop the shooting (step S16), the cellular phone 1 deactivates the camera unit 11b.

An operation example of the cellular phone 1 when shooting is made with the user shooting side camera (camera unit 11a) is described next.

The camera unit 11a is provided on the same side as the display unit 13, and is mainly used by a user to shoot an image including the user himself. Accordingly, the distance between the camera unit 11a and the user is assumed to be on the order of 50 to 60 centimeters at the maximum, in which the user reaches out his hand to take a shot. Additionally, if switching of the activated camera unit 11 is made from the camera unit 11b to the camera unit 11a when shooting is made, switching of the mobile light 12 is also made from the mobile light 12b to the mobile light 12a in synchronization. Since the mobile light 12a assumes that the subject is at a spacing of the order of 50 to 60 centimeters at the maximum, it has a light level suitable for illuminating a subject at a distance of the above described order.

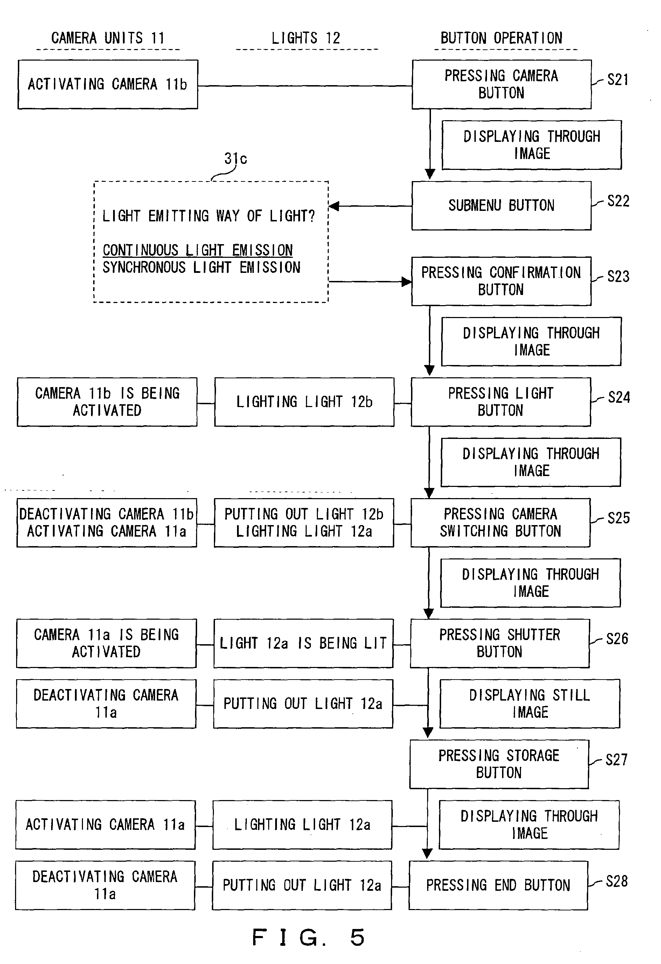

**Fig. 5** is a flowchart showing a first operation process example of the cellular phone 1 when shooting is made with the camera unit 11a.

When a user presses the camera button of the button inputting unit 14 so as to take a shot with the cellular phone 1 (step S21), the cellular phone 1 activates the default camera unit 11b, and makes the display unit 13 display a through image viewed on the camera unit 11b.

Next, when the user presses the submenu button and performs an operation (step S22), the cellular phone 1 makes the display unit 13 display a menu 31c for selecting the light emission mode of the mobile lights 12. When the user selects either the continuous light emission mode or the synchronous light emission mode on the screen of the display unit 13 by operating the UP/DOWN button of the button inputting unit 14, and presses the conformation button (step S23), the cellular phone 1 sets operation settings for the selected light emission mode. The example shown in this figure assumes that the user selects the continuous light emission mode.

Next, when the user presses the light button (step S24), the cellular phone 1 lights the mobile light 12b since the continuous light emission mode is selected.

Because the user desires to take a shot on the user shooting side with the camera unit 11a, the user presses the camera switching button of the button inputting unit 14 (step S25). As a result, the cellular phone 1 deactivates the camera unit 11b, and activates the camera unit 11a instead. Additionally, the cellular phone 1 makes the display unit 13 display a through image viewed on the camera unit 11a. In response to the press of the camera switching button, the cellular phone 1 puts out the mobile light 12b, and lights the mobile light 12a instead in synchronization with the switching between the camera units 11.

In this state, assume that the user moves the position or the orientation of the cellular phone 1 while viewing the through image displayed on the display unit 13, and presses the shutter button of the button inputting unit 14 when an image that the user desires to shoot is displayed on the display unit 13 (step S26). In response to the press of the shutter button, the cellular phone 1 takes a shot with the camera unit 11a, deactivates the camera unit 11a thereafter, and puts out the mobile light 12a. Additionally, the cellular phone 1 makes the display unit 13 display the image shot at this time as a still image.

When the user presses the storage button so as to store this shot image (step S27), the cellular phone 1 records the data of the shot image in the flash memory 27, activates the camera unit 11a for the next shooting, makes the display unit 13 display a through image, and lights the mobile light 12a.

In this state, when the user presses the end button of the button inputting unit 14 so as to stop the shooting (step S28), the cellular phone 1 deactivates the camera unit 11a, and puts out the mobile light 12a.

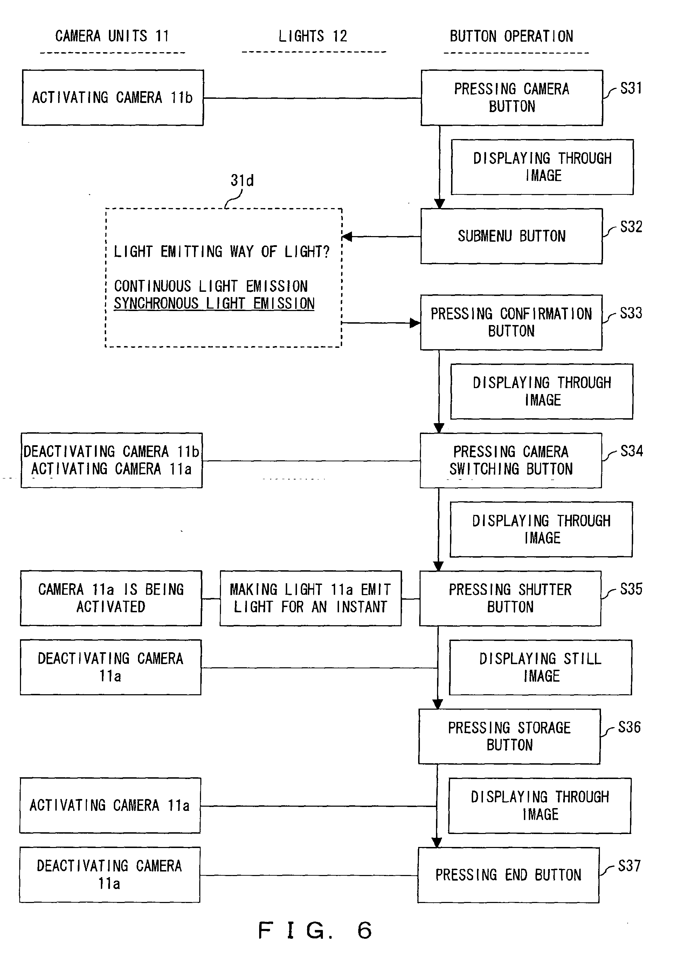

**Fig. 6** is a flowchart showing a second operation process example of the cellular phone 1 when shooting is made with the camera unit 11a on the user shooting side. The second operation process example shows an operation example of the cellular phone 1 when the synchronous light emission mode is selected as a way of lighting the mobile light 12b.

When a user presses the camera button of the button inputting unit 14 so as to take a shot with the cellular phone 1 (step S31), the cellular phone 1 activates the default camera unit 11b, and makes the display unit 13 display a through image viewed on the camera unit 11b.

When the user presses the submenu button (step S32), the cellular phone 1 makes the display unit 13 display a menu 31d for selecting the light emission mode of the mobile lights 12. When the user presses the confirmation button after selecting either the continuous light emission mode or the synchronous light emission mode in the menu 31d by operating the UP/DOWN button (step S33), the cellular phone 1 makes operation settings for the selected light emission mode. In the example shown in this figure, the user selects the continuous light emission mode.

When the user presses the camera switching button so as to take a shot with the camera unit 11a on the user shooting side (step S34), the cellular phone 1 deactivates the camera unit 11b, and activates the camera unit 11a. Additionally, the cellular phone 1 makes the display unit 13 display a through image viewed on the camera unit 11a.

In this state, assume that the user moves the position or the orientation of the cellular phone 1 while viewing the through image displayed on the display unit 13, and presses the shutter button when an image that the user desires to shoot is displayed on the display unit 13 (step S34). After the cellular phone 1 makes the mobile light 12a emit light for an instant, and takes a shot with the camera unit 11a in synchronization with the press of the shutter button, it deactivates the camera unit 11a. Then, the cellular phone 1 makes the display unit 13 display the image shot at this time as a still image.

When the user presses the storage button so as to store this shot image (step S35), the cellular phone 1 records the data of the shot image in the flash memory 27, activates the camera unit 11a for the next shooting, and makes the display unit 13 display a through image.

In this state, when the user presses the end button of the button inputting unit 14 so as to stop the shooting (step S36), the cellular phone 1 deactivates the camera unit 11a.

An operation example of the cellular phone 1 when shooting is made by switching to the camera unit 11a after shooting is made with the camera unit 11b is described next.

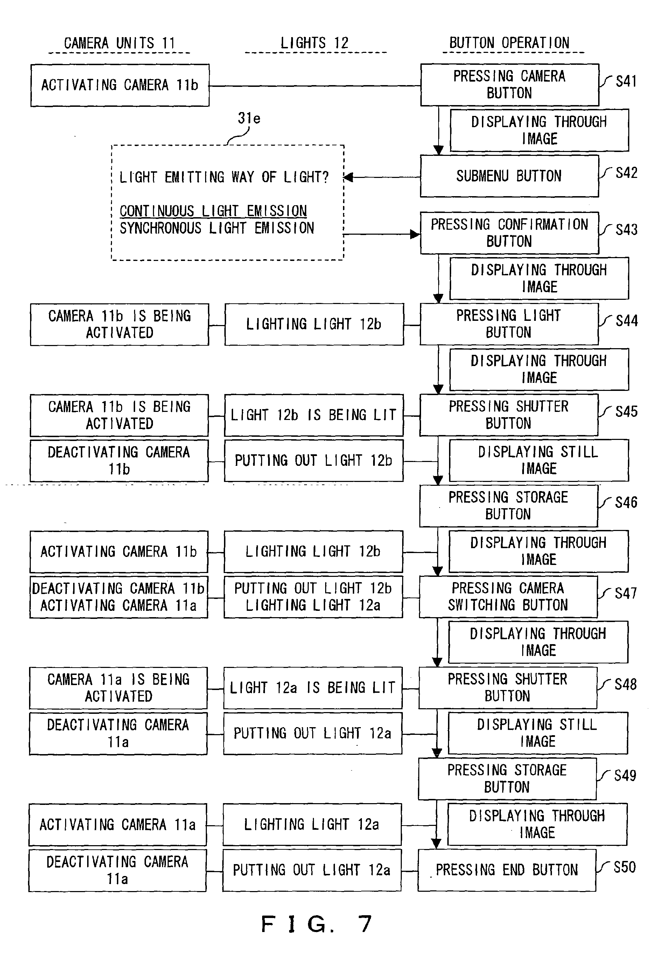

**Fig. 7** is a flowchart showing a first operation process example in such a case.

In this figure, when a user presses the camera button so as to take a shot with the cellular phone 1 (step S41), the cellular phone 1 activates the default camera unit 11b, and makes the display unit 13 display a through image viewed on the camera unit 11b.

Next, when the user presses the submenu button and performs an operation (step S42), the cellular phone 1 makes the display unit 13 display a menu 31e for selecting the light emission mode of the mobile lights 12. When the user selects either the continuous light emission mode or the synchronous light emission mode in the menu 31e by operating the UP/DOWN button, and presses the confirmation button (step S43), the cellular phone 1 makes operation settings for the selected light emission mode. The example shown in this figure assumes that the user selects the continuous light emission mode.

Next, when the user presses the light button (step S44), the cellular phone 1 lights the mobile light 12b since the continuous light emission mode is selected.

In this state, assume that the user moves the position or the orientation of the cellular phone 1 while viewing the through image displayed on the display unit 13, and presses the shutter button when an image that the user desires to shoot is displayed on the display unit 13 (step S45). As a result, the cellular phone 1 takes a shot with the camera unit 11b, deactivates the camera unit 11b thereafter, and puts out the mobile light 12b. Then, the cellular phone 1 makes the display unit 13 display the image shot at this time as a still image.

When the user presses the storage button so as to store this shot image (step S46), the cellular phone 1 records the data of the shot image in the flash memory 27, activates the camera unit 11b for the next shooting, makes the display unit 13 display a through image, and lights the mobile light 12b.

Assume that the user presses the camera switching button next so as to use the camera unit 11a (step S47). In response to the press of the camera switching button, the cellular phone 1 deactivates the camera unit 11b, and activates the camera unit 11a instead. Additionally, the cellular phone 1 puts out the mobile light 12b, and lights the mobile light 12a instead in synchronization with the switching of the camera unit 11. Furthermore, the cellular phone 1 makes the display unit 13 display a through image viewed on the camera unit 11a.

In this state, assume that the user moves the position or the orientation of the cellular phone 1 while viewing the through image displayed on the display unit 13, and presses the shutter button (step S48). As a result, the cellular phone 1 takes a shot with the camera unit 11a, deactivates the camera unit 11a thereafter, and puts out the mobile light 12a. Additionally, the cellular phone 1 makes the display unit 13 display the image shot at this time as a still image.

When the user presses the storage button so as to store this shot image (step S49), the cellular phone 1 records the data of the shot image in the flash memory 27, activates the camera unit 11a, makes the display unit 13 display a through image, and lights the mobile light 12a.

In this state, when the user presses the end button so as to stop the shooting (step S50), the cellular phone 1 deactivates the camera unit 11a, and puts out the mobile light 12a.

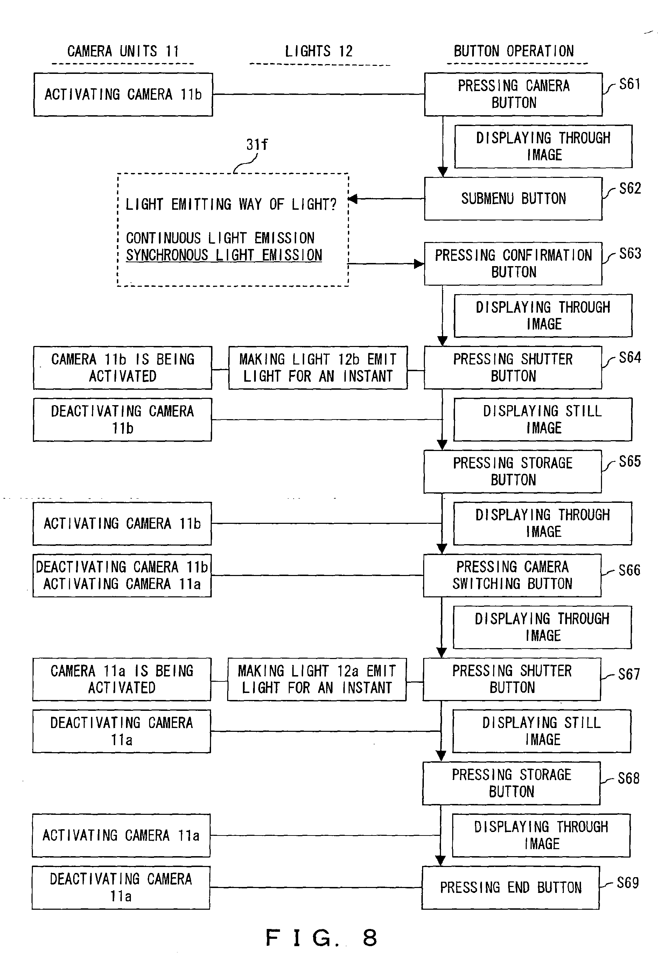

**Fig. 8** is a flowchart showing a second operation process example when shooting is made with the camera unit 11a after shooting is made with the camera unit 11b. The operation process example shown in this figure depicts an operation example of the cellular phone 1 when the synchronous light emission mode is selected as a way of lighting the mobile lights 12.

In this figure, when a user presses the camera button so as to take a shot with the cellular phone 1 (step S61), the cellular phone 1 activates the default camera unit 11b, and makes the display unit 13 display a through image viewed on the camera unit 11b.

Next, when the user presses the submenu button, and performs an operation (step S62), the cellular phone 1 makes the display unit 13 display a menu 31f for selecting the light emission mode of the mobile lights 12. When the user selects either the continuous light emission mode or the synchronous light emission mode in the menu 31f by operating the UP/DOWN button, and presses the confirmation button (step S63), the cellular phone 1 makes operation settings for the selected light emission mode. This figure assumes that the user selects the synchronous light emission mode.

In this state, assume that the user moves the position or the orientation of the cellular phone 1 while viewing the through image displayed on the display unit 13, and presses the shutter button when an image that the user desires to shoot is displayed on the display unit 13 (step S64). In synchronization with the press of the shutter button, the cellular phone 1 makes the mobile light 12b emit light for an instant to illuminate a subject, takes a shot with the camera unit 11b, and deactivates the camera unit 11b thereafter. Additionally, the cellular phone 1 makes the display unit 13 display the image shot at this time as a still image.

When the user presses the storage button so as to store this shot image (step S65), the cellular phone 1 records the data of the shot image in the flash memory 27, activates the camera unit 11b for the next shooting, and makes the display unit 13 display a through image.

Next, when the user presses the camera switching button so as to take a shot with the camera unit 11a on the user shooting side (step S66), the cellular phone 1 deactivates the camera unit 11b, and activates the camera unit 11a. Additionally, the cellular phone 1 makes the display unit 13 display a through image viewed on the camera unit 11a.

In this state, assume that the user moves the position or the orientation of the cellular phone 1 while viewing the through image displayed on the display unit 13, and presses the shutter button (step S67). In synchronization with the press of the shutter button, the cellular phone 1 makes the mobile light 12a emit light for an instant to illuminate a subject, takes a shot with the camera unit 11a, and deactivates the camera unit 11a thereafter. Then, the cellular phone 1 makes the display unit 13 display the image shot at this time as a still image.

When the user presses the storage button so as to store this shot image (step S68), the cellular phone 1 records the data of the shot image in the flash memory 27, activates the camera unit 11a, and makes the display unit 13 display a through image.

In this state, when the user presses the end button so as to stop the shooting (step S69), the cellular phone 1 deactivates the camera unit 11a.

An operation example of the cellular phone 1 when shooting is simultaneously made with the two camera units 11a and 11b is described next.

In this example, shooting is simultaneously made with the two camera units 11a and 11b of the cellular phone 1. This cellular phone 1 enables the usage such that a user is shot with the camera unit 11a, and a peripheral scenic view, etc. is simultaneously shot with the camera unit 11b. The two images shot at this time are used unchanged, or can be used to create an image for which processing such as synthesis, etc. is performed.

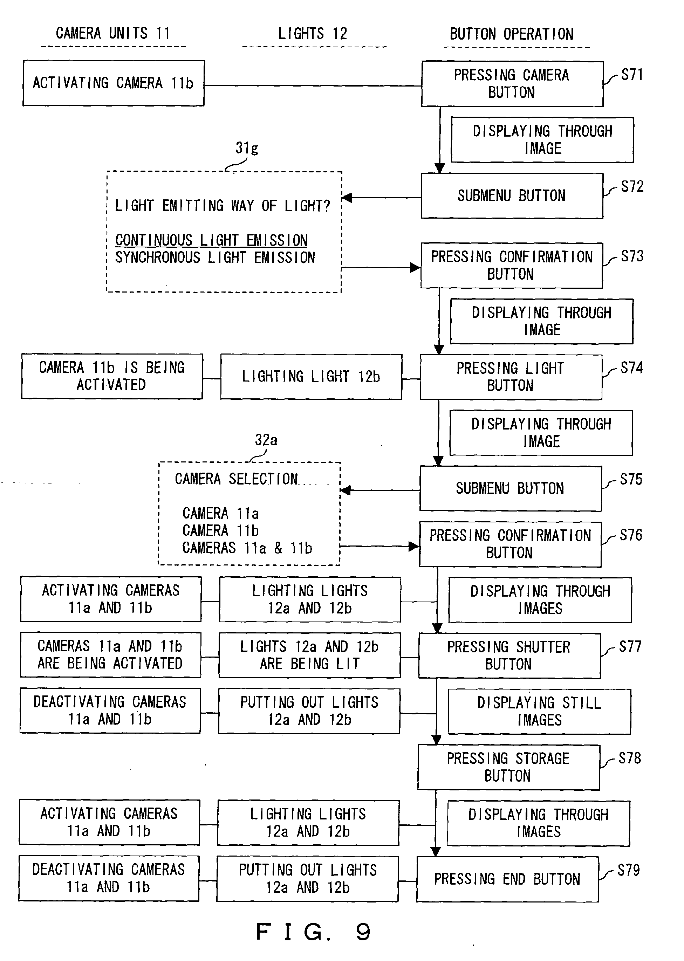

**Fig. 9** is a flowchart showing a first operation process example of the cellular phone 1 in such a case.

In this figure, when a user presses the camera button so as to take a shot with the cellular phone 1 (step S71), the cellular phone 1 activates the default camera unit 11b, and makes the display unit 13 display a through image viewed on the camera unit 11b.

Next, when the user presses the submenu button and performs an operation (step S72), the cellular phone 1 makes the display unit 13 display a menu 31g for selecting the light emission mode of the mobile lights 12. When the user selects either the continuous light emission mode or the synchronous light emission mode in the menu 31g by operating the UP/DOWN button, and presses the confirmation button (step S73), the cellular phone 1 makes operation settings for the operation mode corresponding to the selected light emission mode. This figure assumes that the user selects the continuous light emission mode.

Next, when the user presses the light button (step S74), the cellular phone 1 lights the mobile light 12b corresponding to the camera unit 11b since the continuous light emission mode is selected.

Next, when the user presses the submenu button of the button inputting unit 14 and performs an operation so as to take a shot with both of the camera units 11a and 11b, the cellular phone 1 makes the display unit 13 display a menu 32a for selecting the camera units (step S75). Assume that the user presses the confirmation button after selecting "camera 11a & 11b" in the menu 32a by operating the UP/DOWN button (step S76). In this case, the cellular phone 1 activates both of the camera units 11a and 11b, makes the display unit 13 display through images viewed on the camera units 11a and 11b as a split view of the screen, and lights both of the mobile lights 12a and 12b.

In this state, when the user moves the position or the orientation of the cellular phone 1 while viewing the through images displayed on the display unit 13, and presses the shutter button when images that the user desires to shoot are displayed on the display unit 13 (step S77), the cellular phone 1 takes a shot with both of the camera units 11a and 11b. After executing the shooting process, the cellular phone 1 deactivates the camera units 11a and 11b, and puts out the mobile lights 12a and 12b. Additionally, the cellular phone 1 makes the display unit 13 display the two images shot at this time as a split view of the screen as still images.

When the user presses the storage button so as to store these shot images (step S78), the cellular phone 1 records the data of the images shot with the two camera units 11a and 11b in the flash memory 27, activates the camera units 11a and 11b for the next shooting, makes the display unit 13 display through images viewed on the two camera units 11, and lights the mobile lights 12a and 12b.

In this state, when the user presses the end button so as to stop the shooting (step S79), the cellular phone 1 deactivates the camera units 11a and 11b, and puts out the mobile lights 12a and 12b.

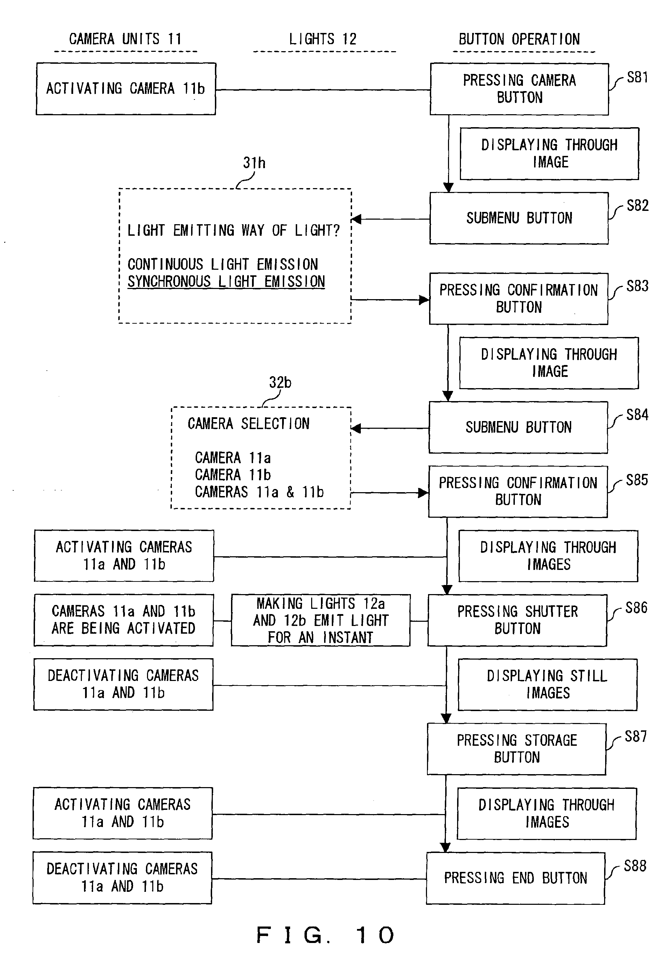

**Fig. 10** is a flowchart showing a second operation process example of the cellular phone 1 when shooting is simultaneously made with the two camera units 11a and 11b of the cellular phone 1. The operation process example shown in this figure depicts an operation example of the cellular phone 1 when the synchronous light emission mode is selected as the way of lighting the mobile light 12b.

In this figure, when a user presses the camera button to take a shot with the cellular phone 1 (step S81), the cellular phone 1 activates the default camera unit 11b, and makes the display unit 13 display a through image viewed on the camera unit 11b.

Next, when the user presses the submenu button and performs an operation (step S82), the cellular phone 1 makes the display unit 13 display a menu 31h for selecting the light emission mode of the mobile lights 12. When the user selects either the continuous light emission mode or the synchronous light emission mode in the menu 31h by operating the UP/DOWN button, and presses the confirmation button (step S83), the cellular phone 1 sets operation settings for the selected light emission mode. This figure assumes that the user selects the synchronous light emission mode.

Next, when the user presses the submenu button, and performs an operation so as to take a shot with both of the camera units 11a and 11b (step S84), the cellular phone 1 makes the display unit 13 display a menu 32b for selecting the camera units. When the user presses the confirmation button after selecting "cameras 11a & 11b" by operating the UP/DOWN button (step S85), the cellular phone 1 activates both of the camera units 11a and 11b, and makes the display unit 13 display through images viewed on the camera units 11a and 11b as a split view of the screen.

In this state, when the user moves the position or the orientation of the cellular phone 1 while viewing the through images displayed on the display unit 13, and presses the shutter button when images that the user desires to shoot are displayed on the display unit 13 (step S86), the cellular phone 1 makes the mobile lights 12a and 12b emit light for an instant to illuminate subjects, and takes a shot with both of the camera units 11a and 11b in synchronization with the press of the shutter button. Thereafter, the cellular phone 1 deactivates the camera units 11a and 11b. Then, the cellular phone 1 makes the display unit 13 display the two images shot at this time as a split view of the screen as still images.

When the user presses the storage button so as to store these shot images (step S87), the cellular phone 1 records the data of the images shot with the two camera units 11a and 11b in the flash memory 27, activates the camera units 11a and 11b, and makes the display unit 13 display through images viewed on the two camera units 11.

In this state, when the user presses the end button so as to stop the shooting (step S88), the cellular phone 1 deactivates the camera units 11a and 11b.

As described above, with the cellular phone 1 according to this preferred embodiment, when shooting is made only with the camera unit 11a or 11b or with both of the camera units 11a and 11b, switching is automatically made between the mobile lights 12a and 12b in synchronization with the switching between the camera units 11.

According to the present invention, when switching is made between cameras that take a shot in an appliance having a twin camera configuration where two camera units are comprised, also switching can be automatically made between two light sources that govern a flash capability.

Additionally, a user of the appliance can change a way of emitting light of the light sources depending on usage.

## Claims

1. A portable electronic appliance, comprising:
a first camera unit (11a) shooting an image;
a second camera unit (11b), which is arranged on a side different from the first camera unit, shooting an image;
a first light (12a) illuminating a shooting target when shooting is made with the first camera unit;
a second light (12b) illuminating a shooting target when shooting is made with the second camera unit;
a camera-selecting unit selecting at least one of the first and the second camera units;
a light-selecting unit selecting at least one of the first and second lights on the basis of a selection made by the camera-selecting unit; and
a shooting controlling unit for taking a shot by using the or each camera selected by the camera-selecting unit, and the or each light selected by the light-selecting unit.

2. A portable electronic appliance according to claim 1, wherein the shooting controlling unit lights the or each light selected by the light-selecting unit from a time point prior to a time point when shooting is made with the or each camera unit selected by the camera-selecting unit.

3. A portable electronic appliance according to claim 1, wherein the shooting controlling unit lights the or each light selected by the light-selecting unit in synchronization with shooting made with the or each camera unit selected by the camera-selecting unit.

4. A portable electronic appliance according to any preceding claim, wherein the camera-selecting unit is adapted to select between:
only the first camera unit;
only the second camera unit; and
both first and second camera units.

5. A portable electronic appliance according to claim 4, wherein the light-selecting unit selects the first light when the camera-selecting unit selects only the first camera unit, selects the second light when the camera-selecting unit selects only the second camera unit, and selects both the first light and the second light when the camera-selecting unit selects both the first camera unit and the second camera unit.

6. A portable electronic appliance according to any preceding claim, wherein the shooting controlling unit switches between a mode where the or each light selected by the light-selecting unit is lit in synchronization with shooting made with the first camera unit or the second camera unit, as selected by the camera-selecting unit, and a mode where the or each light is lit from a time point prior to the time point when the shooting is made, on the basis of a user instruction.

7. A portable electronic appliance according to any preceding claim, further comprising a display unit (13) displaying an image from the first camera unit and/or the second camera unit, as selected by the camera-selecting unit.

8. A portable electronic appliance according to claim 7, wherein the first camera unit (11a) is provided on the same side as the display unit, and the light level of the first light is lower than the light level of the second light.

9. A portable electronic appliance according to any preceding claim and being a cellular phone.

10. A portable electronic appliance, comprising:
first camera means (11a) for shooting an image;
second camera means (11b), arranged on a side different from the first camera means, for shooting an image;
a first light (12a) for illuminating a shooting target when shooting is made with the first camera means;
a second light (12b) for illuminating a shooting target when shooting is made with the second camera means;
camera-selecting means for selecting one or both of the said camera means;
light-selecting means for selecting one or both of the said lights on the basis of a selection made by the camera-selecting means; and
shooting controlling means for taking a shot by using the camera means selected by the camera-selecting means, and the lights selected by the light-selecting means.

11. A shooting method for use in a portable electronic appliance having a first camera unit shooting an image, and a second camera unit that is provided on a side different from the first camera unit and shoots an image, comprising:
selecting at least either of the first camera unit and the second camera unit;
selecting a first light that is provided on the same side as the first camera unit when only the first camera unit is selected, selecting a second light that is provided on the same side as the second camera unit when only the second camera unit is selected, and selecting both of the first light and the second light when both camera units are selected; and
taking a shot by using at least the selected camera units and the selected lights.
